# EUROPEAN PATENT SPECIFICATION

(11) **EP 4 360 429 B1**
(45) Date of publication and mention of the grant of the patent: **07.05.2025**
(21) Application number: 23204583.1
(22) Date of filing: 19.10.2023
(51) Int. Cl.: A01D 34/685, A01D 34/73, A01D 34/90

(54) **CUTTING DEVICE FOR A LAWNMOWER**
SCHNEIDVORRICHTUNG FÜR EINEN RASENMÄHER
DISPOSITIF DE COUPE POUR TONDEUSE À GAZON

(30) Priority: 27.10.2022 IT 202200022143
(43) Date of publication of application: 01.05.2024
(73) Proprietor: Bernini, Fabrizio, 52021 Bucine - Arezzo (IT)
(72) Inventor: Bernini, Fabrizio, 52021 Bucine - Arezzo (IT)
(74) Representative: Firmati, Leonardo

(56) References cited:
- EP-A1- 2 433 484
- GB-A- 1 236 158
- US-A- 3 500 622
- US-A1- 2017 079 206
- US-A1- 2018 103 583

## Description

This invention relates to a cutting device for a lawnmower.

In particular, the invention relates to a cutting device of the type which can be used in robotized lawnmowers or in machines of another type such as, for example, bush-cutters.

Household appliances of the robotized type, which are able to perform the most diverse activities in total autonomy, are currently increasingly widespread in our homes.

With particular attention to gardening activities, lawnmowers of the robotized type are increasingly requested such as to autonomously perform the care of the garden, levelling the lawn, cutting weeds and in some cases also infesting woody plants with complicated removal, such as, for example, bushes or the like. There are currently numerous types of prior art cutting devices installed in machines for cutting grass or in other machines such as, for example, bush-cutters or robots programmed for cutting grass.

As is known, these cutting devices for lawnmowers are equipped with cutting blades which are in themselves potentially dangerous for the user or other persons or animals which may be present close to the devices during their use.

In order to limit the dangerousness of such devices provided with blades, regulations were introduced, designed to ensure that during use such blades cannot easily reach elements other than the grass, in particular inflexible, rigid or semi-rigid elements, such as legs, arms or other parts of the bodies of people or animals. However, there is always a potential risk of accidental injury which cannot be completely eliminated, since the cutting device must in any case be supplied with a sharpened blade able to cut the grass, which is what the device was designed to do.

There are currently cutting devices for lawnmowers or the like such as to comprise the presence of a drive shaft designed to rotate a disc.

On a prior art type of lawnmower this disc constitutes the actual cutting blade.

There are currently solutions by which an attempt has been made to increase the safety level of the cutting operation, for example by mounting a plurality of blades fixed on the disc by means of respective pins, about which the rotation of the blades is allowed.

That structure and operating system allow the blades, pushed by centrifugal force, to be in the cutting position emerging from the disc when this is in free rotation on its axis, and that the blades just encounter greater strength than that of a piece of grass, that is to say, when they impact rigid or semi-rigid materials (such as parts of the bodies of people, animals but also stones or detaches), rotate about the respective pins in such a way as to be substantially harmless or not seriously harmful.

Whilst offering an improved solution to the above-mentioned problems, these prior art cutting devices for lawnmowers are certainly not without drawbacks.

A first drawback of the prior art devices is due to the fact that as a result of the presence of the single pin, they are not always able to guarantee an optimum efficiency during the cutting, both in quantitative and qualitative terms.

Another major drawback of the prior art cutting devices is due to the fact that if the single pin on which they are fixed breaks the blades mounted on these devices would risk being thrown dangerously on account of the centrifugal force.

Another drawback is due to the fact that prior art cutting devices do not always allow the resistant force of the blade to be adjusted in such a way as to be able to adjust to the type of grass or plants to be cut, this adjustment can in effect only be determined by means of the clamping force of the individual pin between the blade and the disc.

A further drawback of prior art cutting devices is due to the fact that they are not always easy to make or practical to dismantle and repair if it were necessary, for example, to replace a damaged blade.

Further cutting devices are e.g. known from EP 2 433 484 A1, US 2018/103583 A1, US 3 500 622 A, GB 1 236 158 A and US 2017/079206 A1.

The aim of the invention is therefore to provide a cutting device for a lawnmower which is able to overcome the drawbacks of the prior art.

A further aim of the invention is to provide a cutting device for a lawnmower which is able to optimise the cutting efficiency in both quantitative and qualitative terms whilst maintaining a high degree of safety for any nearby persons or animals.

Another aim of the invention is to provide a cutting device for a lawnmower which can allow the adjustment of the force necessary for the re-entry of the blades, depending on the type of grass or plants to be cut. Another aim of the invention is to provide a cutting device for a lawnmower which is easy to make and characterised by a high degree of modularity.

In particular, the aim of the invention is to provide a cutting device for a lawnmower which allows the number of blades mounted on it to be easily varied, in such a way that a user can select the embodiment which he/she considers most adequate on the basis of efficiency, energy or noise.

A further aim of the invention is to provide a cutting device for a lawnmower which is able to optimise the connection between the blades and the rotary disc, in such a way as to prevent dangerous releases of these blades into the surrounding environment following breakage of a single pin, and which, advantageously, is also able to constantly monitor the state of the pins themselves.

A further aim of the invention is to provide a cutting device for a lawnmower in which the operations for removing and replacing one or more blades are practical and fast.

According to the invention, these aims and others are achieved by a cutting device for a lawnmower comprising the technical features described in the accompanying claims.

The technical features of the invention, according to the above-mentioned aims, are clearly described in the appended claims and its advantages are apparent from the detailed description which follows, with reference to the accompanying drawings which illustrate a nonlimiting example embodiment of it, and in which:
- Figure 1 shows a schematic perspective view from above of a cutting device for a lawnmower according to the invention,
- Figure 2 shows a schematic view from below of the device of Figure 1,
- Figure 3 shows a schematic perspective view from above of a detail of the device of Figure 1,
- Figure 4 shows a partial schematic side view of the device of Figure 1,
- Figure 5 shows a schematic plan view of a blade of the device according to the invention,
- Figure 6 shows a schematic perspective view of the blade of Figure 5,
- Figure 7 shows a schematic side view in cross-section of a detail of the device according to the invention,
- Figure 8 shows a schematic view from above of the device according to the invention and
- Figure 9 shows a partial view of a detail of the device according to the invention.

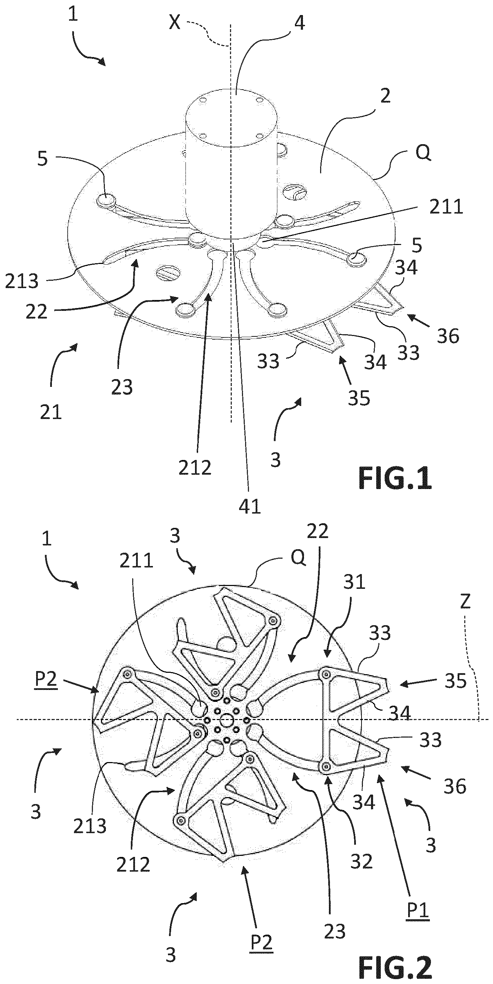

With reference to Figure 1, the numeral 1 denotes in its entirety a cutting device for a lawnmower made in accordance with the invention, hereinafter also referred to simply as the device 1.

The device 1 according to the invention comprises a rotating element 2.

Advantageously, the rotating element 2 is substantially disc-shaped.

Advantageously, moreover, the rotating element 2 has a substantially circumferential outer perimeter Q, and an inner surface which is at least partly notched.

The rotating element 2 has a plurality of pairs 21 of first 22 and second 23 slots.

Each of the first 22 and second 23 slots has an insertion hole 211, a curved sliding portion 212 and an end 213 proximal to the outer perimeter Q of the rotating element 2.

The device 1 according to the invention also comprises a plurality of blades 3.

Each of the blades 3 has a first 31 and a second 32 end for engaging with respective first 22 and second 23 slots.

Each of the first 31 and second 32 ends for engaging the blades 3 is designed to be inserted in the insertion holes 211 and to slide in an alternating fashion, respectively, on one of the respective first 22 and second 23 slots.

With reference to Figure 2, each of the blades 3 of the above-mentioned plurality is designed to pass from:
- an extracted position P1 wherein the first 31 and second 32 engagement ends of a predetermined blade 3 are arranged to be abutted with the proximal ends 213 of first 22 and second 23 slots and the predetermined blade 3 protrudes at least partly from the outer perimeter Q of the rotating element 2, to
- a retracted position P2 wherein one between the first 31 and second 32 engagement ends of the blade 3 is positioned in an intermediate position between the insertion hole 211 and the respective proximal end 213, and the other between the first 31 and second 32 engagement ends is positioned in contact with the respective proximal end 213 defining a rotation pin of the blade 3.

When the blade 3 is in the retracted position P2, it does not protrude relative to the outer perimeter Q of the rotating element 2.

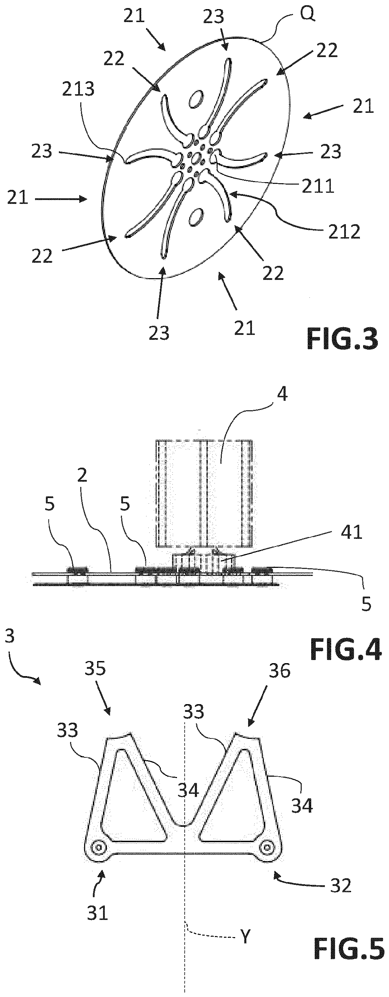

With reference to Figures 1 and 4, the device 1 also comprises a drive shaft 4, advantageously connected to a mechanical power supply unit.

The drive shaft 4 has a main axis of extension X and is designed to rotate the rotating element 2 about the axis X, in such a way as to generate a centrifugal force on the blades 3.

In detail, when the rotating element 2 is rotated, each of the blades 3 tends to position itself in an extracted position P1 due to the effect of the centrifugal force acting on them.

When, on the other hand, a predetermined blade 3 strikes any object characterised by a resistant force greater than that for which the cutting action is set (for example, greater than the resistant force of a blade of grass or of a plant), that same blade tends to pass to the retracted position P2 for a reset period, that is to say, until that blade 3 returns to the extracted position P1 by the action of the centrifugal force.

In particular, the term retracted position P2 does not mean a single position, but a range of positions which a predetermined blade 3 occupies from the moment in which one between the first 31 and second 32 engagement ends of the predetermined blade 3 is in an intermediate stretch of the respective first 22 and second 23 slots, until the moment in which the same one between the first 31 and second 32 engagement ends returns into contact on the respective proximal end 213, returning the blade 3 to the extracted position P1.

The drive shaft 4 comprises a support 41 for connecting to the rotating element 2.

Advantageously, the connecting support 41 is designed to obstruct at least partly the insertion holes 211 when the drive shaft 4 is stably connected to the rotating element 2.

In particular, the connecting support 41 is designed to occupy a portion of area of each of the insertion holes 211, for enough to make the blades 3 unmissable once mounted, making the surface empty of the insertion holes 211 below the surface of the engagement ends 31 and 32 of the blades 3, and in particular of the connecting elements 5 described below.

Advantageously, the insertion holes 211 have the same diameter and are made on the rotating element 2 in such a way as to be equidistant from the centre of the rotating element 2.

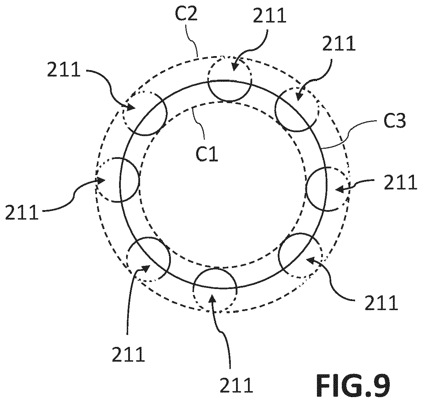

With particular reference to Figure 9, the holes 211 are made in such a way as to be between a first circumference C1 tangent to each of the holes 211 in the points closest to the centre of the rotating element 2, and a second circumference C2 tangent to each of the holes 211 in the points furthest from the centre of the rotating element 2.

Advantageously, the connecting support 41 is of the type with a circular cross-section.

According to the embodiment illustrated in Figures 1 and 4, the connecting support 41 has a constant circular cross section along the axis X.

According to further embodiments, the connecting support 41 has a circular cross section increasing or decreasing along the axis X.

According to other embodiments, the connecting support 41 has an irregular or polygonal cross section.

The circular cross section of the connecting support 41, in the points of connection with the rotating element 2, has a diameter such as to define a third circumference C3 contained between the above-mentioned circumferences C1 and C2.

Again with reference in particular to Figure 9, the third circumference C3 has a diameter greater than the diameter of the first circumference C1 and less than the diameter of the second circumference C2.

Each of the blades 3 comprises at least a first cutting element 33 acting on the grass when the device 1 rotates clockwise about the above-mentioned axis X.

Each of the blades 3 also comprises a second cutting element 34 acting on the grass when the device 1 rotates anticlockwise about the axis X.

Advantageously, and with particular reference to the embodiment illustrated in the accompanying drawings, each of the blades 3 comprises a first 35 and a second 36 portion forming a single body and each comprising at least one cutting element 33 or 34.

Advantageously, the first 35 and second 36 portions are substantially triangular in shape.

Advantageously, moreover, each of the blades 3 comprises a first pair of cutting elements 33 made, respectively, on the first 35 and second portion 36 portions, respectively, and acting on the grass when the device 1 rotates clockwise about the axis X.

Each of the blades 3 also comprises a second pair of cutting elements 34, made respectively on the first 35 and second 36 portions and acting on the grass when the device 1 rotates anticlockwise about the axis X. Advantageously, with reference to Figure 5, the above-mentioned first 35 and second 36 portions of the blades 3 are made symmetrically about an centre line axis Y equidistant between the first 31 and second 32 ends for engaging the blade 3.

This allows the device 1 to be fully used in both directions of rotation, in such a way as to select the best configuration on the basis of the particular working situation, with consequent advantages also in the choice of directing in the expulsion of the cut grass (or weeds, plants or the like).

In detail, when the rotating element 2 rotates in a clockwise direction, the first portions 35 of each blade 3 are subject to impacts, and when an impact occurs on a predetermined blade 3, its first engagement end 31 acts as a rotation pin, whilst its second engagement end 32 slides along the respective slot 23.

When, on the other hand, the rotating element 2 rotates in an anticlockwise direction, the second portions 36 of each blade 3 are subject to impacts, and when an impact occurs on a predetermined blade 3, its second engagement end 32 acts as a rotation pin, whilst its first engagement end 31 slides along the respective slot 22. Advantageously, with reference to Figure 2, the curved portion 212 of the first slots 22 and the curved portion 212 of the second slots 23 are mutually symmetrical with respect to an axis Z perpendicular and incident with the axis X.

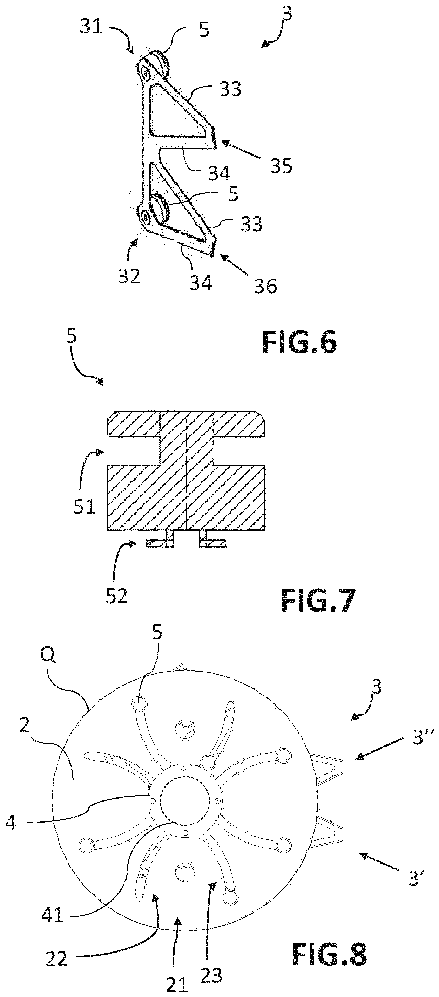

Advantageously, with reference to Figure 7, the first 31 and second end 32 engagement ends each of the blades 3 comprise a connecting element 5.

The connecting element 5 has a sliding seat 51 designed to engage with the thickness of the rotating element 2. The connecting element 5 also comprises means 52 for stable anchoring to the blades 3.

More in detail, the engagement ends 31 and 32 of each blade 3 are inserted, by means of the respective connecting elements 5, one by one in the insertion holes 211 made on the rotating element 2 and made to slide along the first 22 and second 23 slots when the drive shaft 4 is still not mounted on the rotating element 2 by means of the connecting support 41.

Once all the blades 3 have been inserted inside the first 22 and 23 second slots, the drive shaft 4 is mounted on the rotating element 2, in such a way that the connecting support 41 prevents the blades 3 from disconnecting from the device 1.

Substantially, the connecting support 41 acts as a contact and end-of-stroke element for the first 31 and second 32 ends for engaging each blade 3, when a blade 3 is in the retracted position P2.

Advantageously, the device 1 comprises a plurality of sensors (not illustrated) designed to detect any breakages of the engaging ends 31 and 32.

The device 1 according to the invention comprises at least two blades 3.

Advantageously, the device 1 comprises four blades 3.

The possibility of easily varying the number of blades 3 mounted on the rotating element 2 allows the user to be provided with the possibility of choice on the basis of the requirements.

In effect, a reduced number (for example equal to two) of blades 3 mounted on the rotating element 2 allows adequate cutting results to be obtained, considerably reducing the noise produced and limiting the energy consumption.

On the other hand, increasing the number of blades 3 (for example, mounting four blades 3) optimises the cutting efficiency.

Advantageously, the blades 3, when they are in the extracted position P1, are positioned on the rotating element 2 in such a way as to form groups of "n" blades 3 each, wherein the groups are equally distributed angularly on the rotating element 2, and wherein the same "n" blades of a predetermined group are equally distributed to each other specularly to how the n blades of any other group are equally distributed.

In particular, when each group is defined by a single blade 3 (that is to say, with "n" equal to 1), they are positioned angularly equally distributed to each other, for example if there are two blades, they are positioned angularly equally distributed at 180° from each other.

This allows an adequate distribution of the weight and a consequent stability of the rotating element 2 at least during its rotation.

Advantageously, the rotating element 2 is made of steel. Alternatively, the rotating element 2 is made of plastic. Moreover, advantageously, the blades 3 are made of steel. The cutting device 1 for a lawnmower according to the invention overcomes the above-mentioned drawbacks and brings important advantages.

A first important advantage of the cutting device 1 for a lawnmower is due to the fact that the structure of the device 1 makes it possible to optimise the cutting efficiency.

That is because, according to the structure described, each blade 3 may be equipped with two or more cutting elements 33, 34.

Another important advantage of the cutting device 1 for a lawnmower according to the invention is due to the fact that the particular structure by which each blade 3 is fixed to the rotating element 2, that is to say, by two pins defined by the first 31 and by the second 32 engagement ends, makes it possible to optimise the operation and the degree of safety of the device 1.

In particular, the fact that the blades 3 are fixed to the two engagement ends 31 and 32 means that if one of the two is damaged for any reason, the blade 3 is not dangerously thrown outside the volume of the device 1 by the centrifugal force.

Another advantage of the cutting device 1 for a lawnmower according to the invention is due to its high degree of modularity.

In particular, the device 1 allows a user to easily select the number of blades 3 to be mounted according to the requirements.

Another advantage of the cutting device for a lawnmower is due to the fact that it is simple to make and practical to use, as well as being easy to replace any damaged blade 3.

## Claims

1. A cutting device (1) for a lawnmower comprising:
- a rotating element (2) having a plurality of pairs (21) of first (22) and second (23) slots, each of said first (22) and second (23) slots having an insertion hole (211), a curved sliding portion (212) and an end (213) proximal to the outer perimeter (Q) of said rotating element (2),
- a plurality of blades (3) each having a first (31) and a second (32) engagement end respectively with said first (22) and second (23) slots, each of said first (31) and second (32) engagement ends of said blades (3) being designed to be inserted into said insertion holes (211) and to slide alternately on one of said first (22) and second (23) slots respectively, each of said blades (3) being designed to pass from:
- an extracted position (P1) in which said first (31) and second (32) engagement ends of one determined blade (3) are arranged to be abutted by said proximal ends (213) of said first (22) and second (23) slots and said determined blade (3) emerges at least partially from said outer perimeter (Q) of said rotating element (2), to
- a retracted position (P2) wherein one between said first (31) and said second (32) engagement ends of said determinate blade (3) is positioned at an intermediate position between said insertion hole (211) and said respective proximal end (213) and the other between said first (31) and said second (32) engagement ends is positioned in contact with said respective proximal end (213) defining a rotation pivot of said determinate blade (3), said determinate blade (3) not emerging with respect to said outer perimeter (Q) of said rotating element (2) .

2. The device (1) according to claim 1, further comprising a drive shaft (4) having a main axis (X) of extension and being designed to move said rotating element (2) in rotation about said axis (X) so as to generate a centrifugal force on said blades (3), said drive shaft (4) comprising a support (41) connecting to said rotating element (2), **characterized in that** said support (41) connecting is configured to obstruct at least partially said holes (211) of insertion when said drive shaft (4) is stably connected to said rotating element (2).

3. The device (1) according to any of the preceding claims, **characterized in that** each of said blades (3) comprises at least a first cutting element (33) when said device (1) rotates clockwise around said axis (X), and at least a second cutting element (34) when said device (1) rotates counterclockwise around said axis (X) .

4. The device (1) according to any one of the preceding claims, **characterized in that** each of said blades (3) comprises a first (35) and a second (36) portion defining a single body and each comprising at least one cutting element (33, 34).

5. The device (1) according to claim 4, **characterized by** in that said first (35) and second (36) portions are substantially triangular in conformation, and in that each of said blades (3) comprises a first pair of cutting elements (33) obtained respectively on said first (35) and second (36) portions and active when said device (1) rotates clockwise about said axis (X), and a second pair of cutting elements (34) obtained on said first (35) and second (36) portions respectively and active when said device (1) rotates counterclockwise about said axis (X).

6. The device (1) according to claim 4 or 5, **characterized in that** said first (35) and second (36) portions of said blades (3) are made symmetrically with respect to a centerline axis (Y) equidistant between said first (31) and said second (32) engagement ends of said blade (3).

7. The device (1) according to any one of the preceding claims, **characterized in that** said curved portion (212) of said first (22) slots and said curved portion (212) of said second (23) slots are mutually symmetrical with respect to an axis (Z) perpendicular to and incident with said axis (X).

8. The device (1) according to any of the preceding claims, **characterized in that** each one of said first (31) and second (32) engagement ends of each of said blades (3) comprises a connecting element (5) having:
- a sliding seat (51) designed to engage on the thickness of said rotating element (2),
- stable means (52) of anchoring said blades (3).

9. The device (1) according to any of the preceding claims, **characterized in that** it comprises at least two of said blades (3).

10. The device (1) according to any of the preceding claims, **characterized in that** said rotating element (2) has conformation substantially disc-shaped.

## Patentansprüche

1. Schneidvorrichtung (1) für einen Rasenmäher, umfassend:
- ein Drehelement (2) mit einer Vielzahl von Paaren (21) von ersten (22) und zweiten (23) Schlitzen, wobei ein jeder der ersten (22) und zweiten (23) Schlitze ein Einführloch (211), einen gekrümmten Gleitabschnitt (212) und ein Ende (213) nahe dem Außenumfang (Q) des Drehelements (2) aufweist,
- eine Vielzahl von Klingen (3), die jeweils ein erstes (31) und ein zweites (32) Eingriffsende mit dem ersten (22) und zweiten (23) Schlitz aufweisen, wobei ein jedes der ersten (31) und zweiten (32) Eingriffsende der Klingen (3) dazu ausgelegt ist, in die Einführlöcher (211) eingeführt zu werden und jeweils abwechselnd auf einem des ersten (22) und zweiten (23) Schlitzes zu gleiten, wobei eine jede der Klingen (3) dazu ausgelegt ist, um zu wechseln, von:
- einer ausgezogenen Position (P1), in der das erste (31) und das zweite (32) Eingriffsende einer bestimmten Klinge (3) so angeordnet sind, dass sie an den proximalen Enden (213) des ersten (22) und des zweiten (23) Schlitzes anliegen und die bestimmte Klinge (3) zumindest teilweise aus dem Außenumfang (Q) des Drehelements (2) austritt,
- einer zurückgezogenen Position (P2), in der eines zwischen dem ersten (31) und dem zweiten (32) Eingriffsende der bestimmten Klinge (3) an einer Zwischenposition zwischen dem Einführloch (211) und dem jeweiligen proximalen Ende (213) positioniert ist und das andere zwischen dem ersten (31) und dem zweiten (32) Eingriffsende in Kontakt mit dem jeweiligen proximalen Ende (213) positioniert ist, wodurch ein Drehzapfen der bestimmten Klinge (3) definiert wird, wobei die bestimmte Klinge (3) in Bezug auf den Außenumfang (Q) des Drehelements (2) nicht austritt.

2. Vorrichtung (1) nach Anspruch 1, ferner umfassend eine Antriebswelle (4), die eine Hauptausdehnungsachse (X) aufweist und dazu ausgelegt ist, das Drehelement (2) in Drehung um die Achse (X) zu bewegen, um eine Zentrifugalkraft auf die Klingen (3) zu erzeugen, wobei die Antriebswelle (4) einen Träger (41) umfasst, der mit dem Drehelement (2) verbunden ist, **dadurch gekennzeichnet, dass** der Träger (41) zur Verbindung dazu konfiguriert ist, zumindest teilweise die Einführlöcher (211) zu versperren, wenn die Antriebswelle (4) stabil mit dem Drehelement (2) verbunden ist.

3. Vorrichtung (1) nach einem der vorhergehenden Ansprüche, **dadurch gekennzeichnet, dass** eine jede der Klingen (3) mindestens ein erstes Schneidelement (33), wenn sich die Vorrichtung (1) im Uhrzeigersinn um die Achse (X) dreht, und mindestens ein zweites Schneidelement (34) umfasst, wenn sich die Vorrichtung (1) gegen den Uhrzeigersinn um die Achse (X) dreht.

4. Vorrichtung (1) nach einem der vorhergehenden Ansprüche, **dadurch gekennzeichnet, dass** eine jede der Klingen (3) einen ersten (35) und einen zweiten (36) Abschnitt umfasst, die einen einzelnen Körper definieren und jeweils mindestens ein Schneidelement (33, 34) umfassen.

5. Vorrichtung (1) nach Anspruch 4, **dadurch gekennzeichnet, dass** der erste (35) und der zweite (36) Abschnitt im Wesentlichen dreieckig ausgestaltet sind und dadurch, dass eine jede der Klingen (3) ein erstes Paar Schneidelemente (33), die jeweils an dem ersten (35) und dem zweiten (36) Abschnitt erhalten werden und aktiv sind, wenn sich die Vorrichtung (1) im Uhrzeigersinn um die Achse (X) dreht, und ein zweites Paar Schneidelemente (34) umfasst, die jeweils an dem ersten (35) und dem zweiten (36) Abschnitt erhalten werden und aktiv sind, wenn sich die Vorrichtung (1) im Gegenuhrzeigersinn um die Achse (X) dreht.

6. Vorrichtung (1) nach Anspruch 4 oder 5, **dadurch gekennzeichnet, dass** der erste (35) und der zweite (36) Abschnitt der Klingen (3) symmetrisch in Bezug auf eine Mittellinienachse (Y) mit gleichem Abstand zwischen dem ersten (31) und dem zweiten (32) Eingriffsende der Klinge (3) ausgebildet sind.

7. Vorrichtung (1) nach einem der vorhergehenden Ansprüche, **dadurch gekennzeichnet, dass** der gekrümmte Abschnitt (212) der ersten (22) Schlitze und der gekrümmte Abschnitt (212) der zweiten (23) Schlitze gegenseitig symmetrisch in Bezug auf eine Achse (Z) senkrecht zu und einfallend mit der Achse (X) sind.

8. Vorrichtung (1) nach einem der vorhergehenden Ansprüche, **dadurch gekennzeichnet, dass** ein jedes des ersten (31) und zweiten (32) Eingriffsendes einer jeden der Klingen (3) ein Verbindungselement (5) umfasst, aufweisend:
- einen Gleitsitz (51), der so ausgelegt ist, dass er an der Dicke des Drehelements (2) eingreift,
- stabile Mittel (52) zum Verankern der Klingen (3).

9. Vorrichtung (1) nach einem der vorhergehenden Ansprüche, **dadurch gekennzeichnet, dass** sie mindestens zwei der Klingen (3) umfasst.

10. Vorrichtung (1) nach einem der vorhergehenden Ansprüche, **dadurch gekennzeichnet, dass** das Drehelement (2) eine im Wesentlichen scheibenförmige Ausgestaltung aufweist.

## Revendications

1. Dispositif de coupe (1) pour tondeuse à gazon, comprenant :
- un élément rotatif (2) comportant une pluralité de paires (21) de premières (22) et secondes (23) fentes, chacune desdites premières (22) et secondes (23) fentes comportant un trou d'insertion (211), une partie coulissante incurvée (212) et une extrémité (213) proximale du périmètre extérieur (Q) dudit élément rotatif (2),
- une pluralité de lames (3) comportant chacune une première (31) et une seconde (32) extrémité d'engagement respectivement avec lesdites premières (22) et secondes (23) fentes, chacune desdites première (31) et seconde (32) extrémité d'engagement desdites lames (3) étant conçue pour être introduite dans lesdits trous d'insertion (211) et pour coulisser alternativement, respectivement, sur l'une desdites premières (22) et secondes (23) fentes, chacune desdites lames (3) étant conçue pour passer :
- d'une position extraite (P1) dans laquelle lesdites première (31) et seconde (32) extrémités d'engagement d'une lame (3) déterminée sont disposées pour venir se mettre en butée contre lesdites extrémités proximales (213) desdites premières (22) et secondes (23) fentes et ladite lame (3) déterminée émerge au moins partiellement dudit périmètre extérieur (Q) dudit élément rotatif (2), à
- une position rétractée (P2), dans laquelle l'une entre lesdites première (31) et seconde (32) extrémités d'engagement de ladite lame (3) déterminée est positionnée à une position intermédiaire entre ledit trou d'insertion (211) et ladite extrémité proximale (213) respective et l'autre entre lesdites première (31) et seconde (32) extrémités d'engagement est positionnée en contact avec ladite extrémité proximale (213) respective définissant un pivot de rotation de ladite lame (3) déterminée, ladite lame (3) déterminée n'émergeant pas par rapport audit périmètre extérieur (Q) dudit élément rotatif (2).

2. Dispositif (1) selon la revendication 1, comprenant en outre un arbre d'entraînement (4) comportant un axe principal (X) d'extension et étant conçu pour déplacer ledit élément rotatif (2) en rotation autour dudit axe (X) de manière à générer une force centrifuge sur lesdites lames (3), ledit arbre d'entraînement (4) comprenant un support (41) se raccordant audit élément rotatif (2), **caractérisé en ce que** ledit support (41) de raccordement est configuré pour obstruer au moins partiellement lesdits trous (211) d'insertion lorsque ledit arbre d'entraînement (4) est raccordé de manière stable audit élément rotatif (2).

3. Dispositif (1) selon l'une quelconque des revendications précédentes, **caractérisé en ce que** chacune desdites lames (3) comprend au moins un premier élément de coupe (33) lorsque ledit dispositif (1) tourne dans le sens des aiguilles d'une montre autour dudit axe (X), et au moins un second élément de coupe (34) lorsque ledit dispositif (1) tourne dans le sens inverse des aiguilles d'une montre autour dudit axe (X).

4. Dispositif (1) selon l'une quelconque des revendications précédentes, **caractérisé en ce que** chacune desdites lames (3) comprend une première (35) et une seconde (36) partie définissant un seul corps et comprenant chacune au moins un élément de coupe (33, 34).

5. Dispositif (1) selon la revendication 4, **caractérisé en ce que** lesdites première (35) et seconde (36) parties sont de conformation sensiblement triangulaire, et **en ce que** chacune desdites lames (3) comprend une première paire d'éléments de coupe (33) obtenus respectivement sur lesdites première (35) et seconde (36) parties et actifs lorsque ledit dispositif (1) tourne dans le sens des aiguilles d'une montre autour dudit axe (X), et une seconde paire d'éléments de coupe (34) obtenus respectivement sur lesdites première (35) et seconde (36) parties et actifs lorsque ledit dispositif (1) tourne dans le sens inverse des aiguilles d'une montre autour dudit axe (X).

6. Dispositif (1) selon la revendication 4 ou 5, **caractérisé en ce que** lesdites première (35) et seconde (36) parties desdites lames (3) sont réalisées symétriquement par rapport à un axe central (Y) équidistant entre lesdites première (31) et seconde (32) extrémités d'engagement de ladite lame (3).

7. Dispositif (1) selon l'une quelconque des revendications précédentes, **caractérisé en ce que** ladite partie incurvée (212) desdites premières (22) fentes et ladite partie incurvée (212) desdites secondes (23) fentes sont mutuellement symétriques par rapport à un axe (Z) perpendiculaire et incident audit axe (X).

8. Dispositif (1) selon l'une quelconque des revendications précédentes, **caractérisé en ce que** chacune desdites première (31) et seconde (32) extrémités d'engagement de chacune desdites lames (3) comprend un élément de raccordement (5) comportant :
- un siège coulissant (51) destiné à s'engager sur l'épaisseur dudit élément rotatif (2),
- des moyens stables (52) d'ancrage desdites lames (3) .

9. Dispositif (1) selon l'une quelconque des revendications précédentes, **caractérisé en ce qu'**il comprend au moins deux desdites lames (3).

10. Dispositif (1) selon l'une quelconque des revendications précédentes, **caractérisé en ce que** ledit élément rotatif (2) a une conformation sensiblement discale.
